# EUROPÄISCHE PATENTSCHRIFT

(11) **EP 1 223 139 B1**
(45) Veröffentlichungstag und Bekanntmachung des Hinweises auf die Patenterteilung: **18.10.2006**
(21) Anmeldenummer: 02000499.0
(22) Anmeldetag: 09.01.2002
(51) Int. Cl.: B66C 1/12, B66C 1/18

(54) **Vorrichtung zum Heben einer Last**
Device for lifting a load
Dispositif pour lever une charge

(30) Priorität: 10.01.2001 DE 10100993
(43) Veröffentlichungstag der Anmeldung: 17.07.2002
(73) Patentinhaber: Spanset Inter AG, 8618 Oetwil am See (CH)
(72) Erfinder: Götz, Rolf, 52531 Übach-Palenberg (DE); Panhausen, Willi, 52538 Gangelt (DE)
(74) Vertreter: Cohausz & Florack

(56) Entgegenhaltungen:
- DE-A- 3 736 825
- GB-A- 2 180 293
- US-A- 2 356 146
- US-A- 5 269 578

## Beschreibung

Die Erfindung betrifft eine Vorrichtung zum Heben einer Last, die ein als Endlosschlinge ausgebildetes Anschlagmittel, insbesondere ein zu einer Rundschlinge gelegtes oder gewebtes textiles Band oder ein endloses Seil, und eine Einrichtung zum Verstellen der Länge des Anschlagmittels umfasst.

Mit Anschlagmitteln werden allgemein beispielsweise beabstandet voneinander angeordnete Befestigungspunkte einer sperrigen Last am Haken eines Kranes für den Transport befestigt. Zu diesem Zweck eingesetzte Anschlagmittel sind typischerweise Seile oder Ketten, die einerseits mit dem Kran und andererseits mit jeweils einem Befestigungspunkt der Last verbunden werden. Grundsätzlich besteht dabei das Bestreben, die Last mit möglichst nur einem einzigen Anschlagmittel am Kranhaken zu befestigen.

Eine Möglichkeit, eine quaderförmige Last bei möglichst gleichmäßiger Belastung des Anschlagmittels an einem Kranhaken zu befestigen, ist aus der US 2 356 146 A bekannt, welche als den nachstliegend Stand der Technik angesehen wird. Das aus dieser Druckschrift bekannte Hebezeug umfasst ein Drahtseil und ein am Haken des jeweiligen Krans zu befestigendes zentrales Tragteil. Das Tragteil weist einen Stützsattel auf, an dessen gegenüberliegende Seiten jeweils ein hakenartiger Vorsprung angeformt ist. In jeden der Vorsprünge wird jeweils ein Ende des Drahtseils eingehängt. Gleichzeitig wird das Drahtseil so um den Stützsattel geschlungen, daß sich aus dem Drahtseil vier Schlaufenabschnitte gleicher Länge bilden. Jeder dieser vier Schlaufenabschnitte wird mit einem Eckpunkt der zu hebenden quaderförmigen Last über an der Last vorhandene Ösen oder Haken verbunden. Da sich das Drahtseil sowohl über den Stützsattel als auch über die der Last zugeordneten Ösen oder Haken selbsttätig verschieben kann, justieren sich die Längen der einzelnen Schlaufenabschnitte beim Heben der Last von selbst.

Problematisch ist dabei einerseits, daß die Funktion des bekannten Hebezeugs eine Beweglichkeit des Seils auf dem Stützsattel und in den Ösen bzw. Haken der Last voraussetzt. Die Länge der einzelnen Schlaufenabschnitte des Drahtseils verstellt sich dementsprechend auch dann, wenn an einem Befestigungspunkt der Last ein höheres Gewicht wirkt als an einem anderen. Dies ist immer dann der Fall, wenn die zu hebende Last eine ungleichförmige Gewichtsverteilung aufweist. Bei einer solchen Gegebenheit kann bei Verwendung des bekannten Hebezeugs nicht gewährleistet werden, daß die Last während ihres Transports eine stabil gesicherte Lage beibehält. Zum anderen ist es bei Hebezeugen der bekannten Art schwierig, die den Abstand des Kranhakens zur Last bestimmende Gesamtlänge des Seils an die jeweiligen Erfordernisse anzupassen.

Alternativ zu offenen Drahtseilen der beim voranstehend erläuterten Stand der Technik verwendeten Art sind als Anschlagmittel Rundschlingen und Bandschlingen in großer Zahl aus der alten DIN 61360 bzw. der neuen DIN EN 1492-1 und -2 bekannt. Zum Ankoppeln dieser Anschlagmittel an die zu hebende Last werden Metallteile wie Verbinder, Haken oder Schäkeleingesetzt. Die Anschlagmittel selbst haben dabei jeweils eine feste Länge und können nur in Verbindung mit Anschlagketten und geeigneten Einrichtungen zum Verkürzen dieser Ketten auf die für die Lösung der jeweiligen Transportaufgabe erforderliche Länge gebracht werden.

Da dieses Vorgehen in vielen Fällen aufwendig und umständlich ist, ist man in der Praxis dazu übergegangen, durch Umschlingen des Kranhakens das Anschlagmittel zu kürzen. Diese Möglichkeit wird allerdings dadurch beschränkt, daß die Anschlagmittel in dem Kranhaken nebeneinander liegen müssen. Andernfalls besteht die Gefahr, daß es zu einer Beschädigung des Anschlagmittels durch Abquetschen und Reibverschleiß kommt. Daher ermöglicht das Umschlingen des Kranhakens nur eine sehr geringe Kürzung des Anschlagmittels.

Die Aufgabe der Erfindung bestand darin, eine Vorrichtung anzugeben, bei der ein als Endlosschlinge ausgebildetes Anschlagmittel der erläuterten Art eingesetzt wird und bei der die Länge des Anschlagmittels auf einfache Weise an die jeweiligen Erfordernisse angepaßt werden kann.

Diese Aufgabe ist gelöst worden durch eine Vorrichtung zum Heben einer Last umfassend ein als Endlosschlinge ausgebildetes Anschlagmittel, insbesondere ein zu einer Rundschlinge gelegtes oder gewebtes textiles Band oder ein endloses Seil, sowie eine Einrichtung zum Verstellen der beim Transport einer Last wirksamen Länge des Anschlagmittels, wobei die Einrichtung ein Trägerteil aufweist, welches an zwei gegenüberliegend und beabstandet zueinander angeordneten Seiten jeweils einen Vorsprung besitzt, um den jeweils ein Abschnitt des Anschlagmittels schlingbar ist.

Die bei einer erfindungsgemäßen Vorrichtung vorhandene, vorzugsweise als geschmiedetes Metallteil hergestellte Einrichtung ist dazu bestimmt, in freier Einspannung zwischen der jeweiligen Hebeeinrichtung und der Last positioniert zu werden. Indem das Anschlagmittel mit jeweils einem der beiden von der Hebeeinrichtung zu der Last führenden Abschnitte um einen der Vorsprünge geschlungen wird, werden die betreffenden Abschnitte in einen im wesentlichen vertikal verlaufenden Teil und einen winklig von dem Trägerteil zum jeweiligen Anschlagpunkt der zu transportierenden Last abgehenden Teil unterteilt. Durch ein einfaches Einstellen des Trägerteils in der Höhe kann dann die Länge des Anschlagmittels und damit einhergehend der Abstand zwischen der Last und der Hebeeinrichtung auf einfache Weise eingestellt werden. Dabei führt ein Verschieben des Trägerteils nach oben aufgrund der damit einhergehenden Verlängerung des winklig verlaufenden Teils des Anschlagmittels zu einer Verkürzung der beim Transport wirksamen Länge des Anschlagmittels. Genauso führt eine Verschiebung des Trägerteils nach unten zu einer Vergrößerung der beim Transport wirksamen Länge des Anschlagmittels.

Die Vorsprünge des erfindungsgemäß verwendeten Trägerteils sind dabei so auszubilden, daß sie eine optimale Führung für das um sie geschlungene Anschlagelement bilden. Eine diesem Zweck in besonders guter Weise gerecht werdende Ausgestaltung der Erfindung ist dadurch gekennzeichnet, daß die Vorsprünge des Trägerteils hakenförmig ausgebildet sind. Alternativ oder ergänzend können die Vorsprünge auch Erhebungen oder Einsenkungen aufweisen, die das Anschlagmittel führen. Insbesondere wenn die Vorsprünge als Haken ausgebildet sind, ist es darüber hinaus zweckmäßig, wenn die Vorsprünge Markierungen aufweisen, die einen kritischen Winkel des von den von dem jeweiligen Vorsprung abgehenden Abschnitts des Anschlagmittels anzeigen. Auf diese Weise wird eine Überlastung der Anschlagmittel im Bereich der an den Vorsprüngen erfolgenden Umschlingung sicher vermieden.

Eine weitere vorteilhafte Variante der Erfindung ist dadurch gekennzeichnet, daß bei der erfindungsgemäß vorgesehenen Einrichtung das Trägerteil im Bereich zwischen den Vorsprüngen ein Umlenkelement zum Umlenken eines weiteren Abschnitts des Anschlagmittels trägt. So können im Bereich der Anschlagpunkte der Last Schlaufenabschnitte gebildet werden, die eine einfache, sichere Befestigung der Last erleichtern. Zudem wird verhindert, daß der die Anschlagpunkte der Last direkt verbindende Abschnitt des Anschlagmittels an der Last anliegt. Auf diese Weise können insbesondere Lasten, an denen keine definierten Anschlagpunkte ausgebildet sind, sicher transportiert werden. Dabei ist es im Hinblick auf eine stabile Ausrichtung des Trägerteils günstig, wenn die Fläche, über welche das Umlenkelement an dem Trägerteil befestigt ist, in Arbeitsstellung der Einrichtung in einer oberhalb der Vorsprünge angeordneten Ebene positioniert ist. Dabei ist das Umlenkelement vorzugsweise so ausgebildet, daß seine Fläche, über die Anschlagmittel geführt ist, unterhalb der Vorsprünge angeordnet ist. Ebenso unterstützt wird die sichere, stabile Ausrichtung des Trägerteils dadurch, daß das Umlenkelement und die Vorsprünge symmetrisch zur in Arbeitsstellung vertikal ausgerichteten Mittelachse des Trägerteils angeordnet sind.

Abhängig von der Art des Anschlagmittels und der jeweiligen Transportaufgabe kann es zweckmäßig sein, das Umlenkelement des Trägerteils der Einrichtung schwenkbar in einer Öffnung des Trägerteils zu lagern. Bei dieser Ausgestaltung ist es beispielsweise möglich, als Umlenkelement einen Karabinerhaken oder vergleichbare Hakenelemente einzusetzen. Alternativ ist es jedoch auch möglich, das Umlenkelement als einen fest mit dem Trägerteil verbundenen Haken auszubilden. In diesem Fall steht ein einfach und kostengünstig herstellbares Trägerteil zur Verfügung, welches optimal an die jeweilige Belastung im Transport angepaßt ist.

Eine weitere Erhöhung der Sicherheit beim Transport einer Last kann dadurch erreicht werden, daß das Trägerteil einer erfindungsgemäß verwendeten Einrichtung eine insbesondere gegenüberliegend zum Umlenkelement angeordnete Öffnung aufweist, durch die ein Schlaufenabschnitt des Anschlagmittels führbar ist. Bei diesem Schlaufenabschnitt wird es sich in der Regel um denjenigen Abschnitt des Anschlagmittels handeln, mit dem die jeweilige Hebeeinrichtung verkoppelt wird. Auf diese Weise wird das Trägerteil durch eine in eine definierte Richtung gerichtete Kraft in einer stabil ausgerichteten Lage gehalten.

Weitere vorteilhafte Ausgestaltungen der Erfindung sind in den abhängigen Ansprüchen angegeben und werden im Zusammenhang mit dem nachfolgend anhand einer Zeichnung beschriebenen Ausführungsbeispiel näher erläutert. Es zeigen:

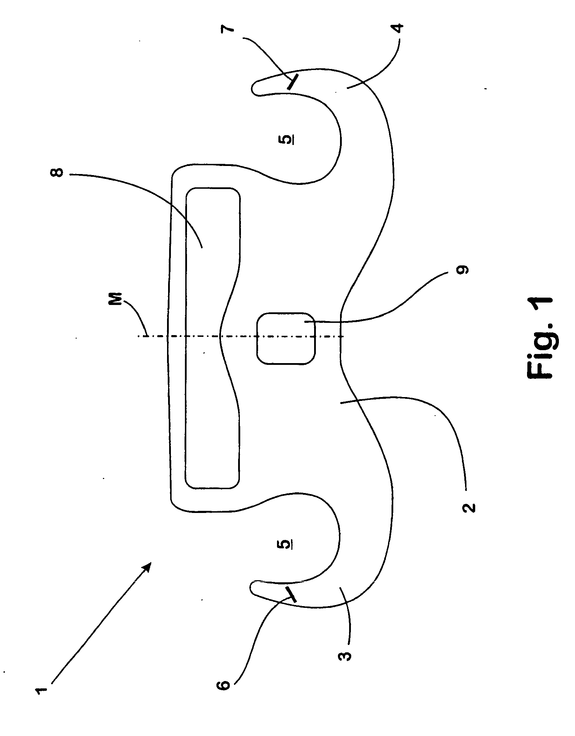

- Fig. 1: ein in einer Einrichtung zur Einstellung der wirksamen Länge eines Anschlagmittels verwendetes Trägerteil in einer Ansicht von vorne,
- Fig. 2: eine Vorrichtung zum Heben einer Last in einer Ansicht von vorne,
- Fig. 3: eine Vorrichtung zum Heben einer anderen Last in einer Ansicht von vorne.

Die Einrichtung 1 zum Verstellen der wirksamen Länge Lw eines als aus einem zu einer Endlosschlinge gelegten textilen Hebeband gebildeten Anschlagmittels A umfaßt ein Trägerteil 2, welches aus einem Metallwerkstoff durch Schmieden einstückig hergestellt ist. Dabei weist die Trägerplatte 2 zwei in Arbeitsstellung im wesentlichen horizontal ausgerichtete Längsseiten und zwei in Arbeitsstellung im wesentlichen vertikal ausgerichtete Schmalseiten auf. An jede der Schmalseiten des Trägerteils 2 ist jeweils ein hakenförmiger Vorsprung 3,4 angeformt. Die Hakenöffnung 5 der Vorsprünge 3,4 ist dabei so ausgelegt, daß die Vorsprünge 3m4 problemlos von dem Anschlagmittel A ohne die Gefahr eines Aufeinanderliegens von Lagen des Anschlagmittels A umschlungen werden können. An den Hakenenden der Vorsprünge sind optische Markierungen 6,7 angeordnet, die einen maximal zulässigen Winkel anzeigen, unter dem der jeweilige lastaufnehmende Abschnitt Al1,Al2 des Anschlagmittels A von dem Trägerteil 2 zu einer Last L1 oder L2 geführt wird. In der Praxis beträgt dieser maximal zulässige Winkel beispielsweise 60 °.

Die Vorsprünge 3,4 sind symmetrisch zur in Arbeitsstellung des Trägerteils 2 im wesentlichen senkrecht verlaufenden Mittelachse M des Trägerteils angeordnet. Ebenso symmetrisch zur Mittelachse M ist im in Arbeitsstellung oberen Bereich des Trägerteils 2 eine breite Öffnung 8 eingeformt, durch die ein einer Hebeeinrichtung H zugeordneter Schlaufenabschnitt As des Anschlagmittels A geführt werden kann.

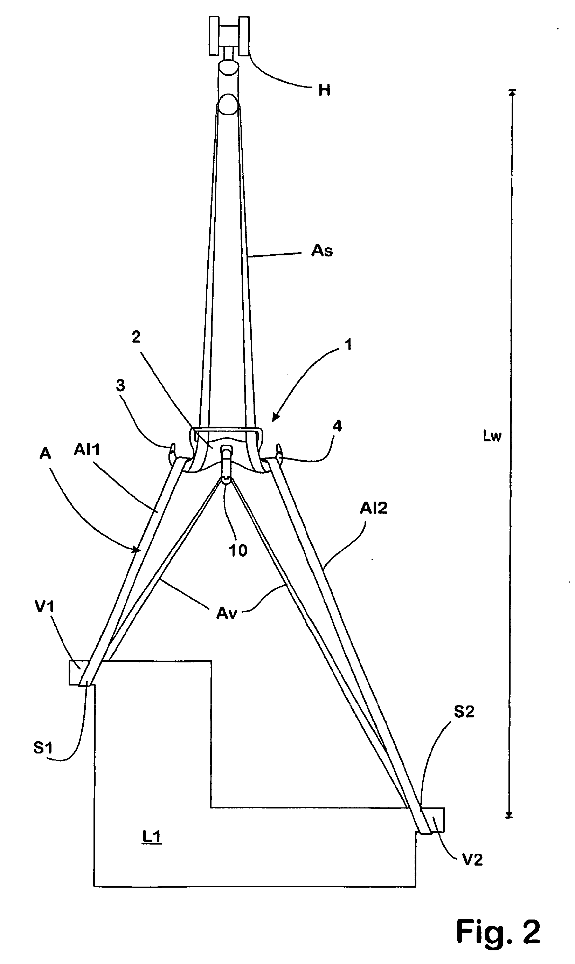

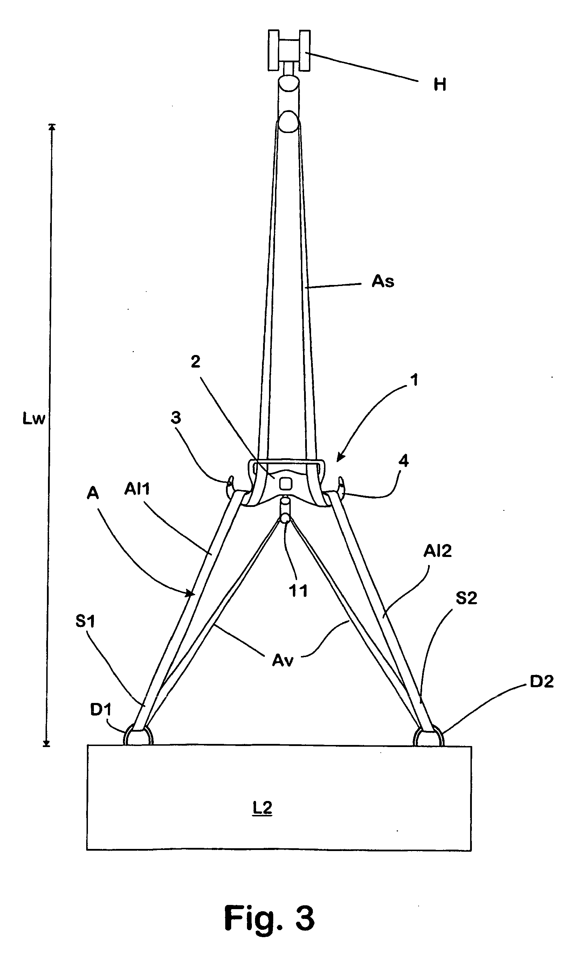

Unterhalb der Öffnung 8 und ebenfalls symmetrisch zur Mittelachse M ist in die Trägerplatte 2 eine zweite Öffnung 9 eingeformt. Beim in Fig. 2 gezeigten Ausführungbeispiel ist in diese Öffnung ein nach Art eines Karabinerhakens ausgebildetes Umlenkelement 10 eingehängt. Beim in Fig. 3 gezeigten Ausführungsbeispiel ist dagegen ein ebenfalls symmetrisch zur Mittelachse M der Trägerplatte 2 ausgerichtetes, hakenförmiges Umlenkelement 11 einstückig an die Trägerplatte 2 angeformt. In die Umlenkeinrichtungen 10,11 wird jeweils der Abschnitt Av des Anschlagmittels A eingehängt, der die Abschnitte Al1 und Al2 im Bereich der zu transportierenden Last L1,L2 miteinander verbindet. Auf diese Weise sind am Ende der Abschnitte Al1 und Al2 Schlaufen S1,S2 gebildet, die eine einfache, sichere Verkopplung von Last L1,L2 und Anschlagmittel A ermöglichen. Gleichzeitig sind mit dem Anschlagmittel A in Kontakt kommende Flächen der Umlenkelemente 10,11 so weit unterhalb der Vorsprünge 3,4 der Trägerplatte 2 angeordnet, daß durch die vom Abschnitt Av eingeleitete Kraft die Lage des Trägerteils zusätzlich stabilisiert wird.

Die in Fig. 2 dargestellte Vorrichtung V1 dient zum Anheben der Last L1. Diese verfügt über keine definierten Anschlagpunkte. Stattdessen werden an der Last vorhandene Vorsprünge V1,V2 zum Ankoppeln der Last L1 an den Haken H einer weiter nicht dargestellten Transportvorrichtung genutzt.

Zu diesem Zweck ist der Schlaufenabschnitt As von vorne nach hinten durch die Öffnung 8 des Trägerteils 2 geführt und in den Haken H eingehängt, so daß zwei seitliche Abschnitte Al1 und Al2 des Anschlagmittels A vorhanden sind, die den Haken H jeweils mit einem der Vorsprünge V1,V2 verbinden. Ausgehend von der Öffnung 8 sind diese Abschnitte Al1 und Al2 jeweils einmal um einen der Vorsprünge 3,4 geschlungen, ohne aufeinander zu liegen, so daß sie von der Vorderseite des Trägerteils 2 kommend zum jeweiligen Vorsprung V1,V2 der Last L1 geführt sind. Der die den Vorsprüngen V1,V2 zugeordneten Enden der Abschnitte Al1 und Al2 verbindende Abschnitt Av des Anschlagmittels A ist in das Umlenkelement 10 eingehakt, so daß die Last L1 mit ihren Vorsprüngen V1,V2 sicher in den Schlaufen S1,S2 gehalten ist.

Beim in Fig. 3 gezeigten Ausführungsbeispiel ist das Anschlagmittel A in gleicher Weise wie beim in Fig. 2 gezeigten Ausführungsbeispiel mit seinen Abschnitten Al1 und Al2 um die Vorsprünge 3,4 und mit seinem Schlaufenabschnitt As durch die Öffnung 8 des Trägerteils 2 geführt und in den Haken H der weiter nicht dargestellten Hebeeinrichtung eingehängt. In ebenso entsprechender Weise ist der Abschnitt Av des Anschlagmittels A in das hakenförmige, auf der der Last L2 zugeordneten Seite der Trägerplatte 2 angeordnete Umlenkelement 11 eingehängt.

Im Unterschied zum Ausführungsbeispiel gemäß Fig. 2 ist die Last L2 jedoch mit definierten Anschlagpunkten D1,D2 in Form von fest mit der Last L2 verbundenen Ösen ausgestattet. In diese wird jeweils eine der Schlaufen S1,S2 eingehakt, wozu insbesondere geeignete Schäkel, Haken oder ähnliches eingesetzt werden können.

Beispielsweise zur Anpassung der wirksamen Länge Lw des Anschlagmittels A an den zwischen dem Haken H und der Last L1 oder L2 bestehenden Abstand wird das Trägerteil 2 im lastfreien Zustand vertikal in der Höhe verschoben. Damit einhergehend wird die Länge des im wesentlichen vertikal verlaufenden Schlaufenabschnitts As und die Länge der im Winkel vom Trägerteil 2 zur jeweiligen Last L1 bzw. L2 verlaufenden Abschnitte Al1, Al2 des Anschlagmittels A verändert. Eine Verschiebung des Trägerteils 2 nach oben bewirkt so eine Verkürzung der wirksamen Länge Lw, während durch eine Verschiebung nach unten die Länge Lw vergrößert wird.

### BEZUGSZEICHEN

- 1: Die Einrichtung 1 zum Verstellen der wirksamen Länge Lw
- 2: Trägerteil
- 3,4: hakenförmige Vorsprünge
- 5: Hakenöffnung der Vorsprünge 3,4
- 6,7: optische Markierungen
- 8: Öffnung
- 9: Öffnung
- 10: Umlenkelement
- 11: Umlenkelement

- A: Anschlagmittel
- A11,A12: lastaufnehmende Abschnitte des Anschlagmittels A
- As: Schlaufenabschnitt
- As: Schlaufenabschnitt des Anschlagmittels
- Av: Abschnitt des Anschlagmittels
- D1,D2: Anschlagpunkt
- H: Hebeeinrichtung
- L1,L2: Last
- Lw: wirksame Länge
- M: Mittelachse des Trägerteils 2
- S1,S2: Schlaufen
- V1,V2: Vorsprünge

## Patentansprüche

1. Vorrichtung zum Heben einer Last (L1,L2) umfassend ein als Endlosschlinge ausgebildetes Anschlagmittel (A), insbesondere ein zu einer Rundschlinge gelegtes oder gewebtes textiles Band oder ein endloses Seil, sowie eine Einrichtung (1) zum Verstellen der beim Transport einer Last (L1,L2) wirksamen Länge (Lw) des Anschlagmittels (A), wobei die Einrichtung (1) ein Trägerteil (2) aufweist, welches an zwei gegenüberliegend und beabstandet zueinander angeordneten Seiten jeweils einen Vorsprung (3,4) besitzt, um den jeweils ein Abschnitt (A11,A12) des Anschlagmittels (A) schlingbar ist.

2. Vorrichtung nach Anspruch 1, **dadurch gekennzeichnet, daß** die Vorsprünge (3,4) des Trägerteils (2) der Einrichtung (1) hakenförmig ausgebildet sind.

3. Vorrichtung nach Anspruch 1 oder 2, **dadurch gekennzeichnet, daß** die Vorsprünge (3,4) des Trägerteils (2) der Einrichtung (1) Erhebungen oder Einsenkungen aufweisen, die das Anschlagmittel (A) führen.

4. Vorrichtung nach einem der voranstehenden Ansprüche, **dadurch gekennzeichnet, daß** die Vorsprünge (3,4) des Trägerteils (2) der Einrichtung (1) Markierungen (6,7) aufweisen, die einen kritischen Winkel des von den von dem jeweiligen Vorsprung (3,4) abgehenden Abschnitts (A11,A12) des Anschlagmittels (A) anzeigen.

5. Vorrichtung nach einem der voranstehenden Ansprüche, **dadurch gekennzeichnet, daß** die Vorsprünge (3,4) des Trägerteils (2) der Einrichtung (1) in Arbeitsstellung der Einrichtung (1) im wesentlichen in einer gemeinsamen Horizontalebene angeordnet sind.

6. Vorrichtung nach einem der voranstehenden Ansprüche, **dadurch gekennzeichnet, daß** das Trägerteil (2) der Einrichtung (1) im Bereich zwischen den Vorsprüngen (3,4) ein Umlenkelement (10,11) zum Umlenken eines weiteren Abschnitts (Av) des Anschlagmittels (A) trägt.

7. Vorrichtung nach Anspruch 5 und 6, **dadurch gekennzeichnet, daß** die kraftaufnehmende Fläche, über welche das Umlenkelement (10,11) an dem Trägerteil (2) der Einrichtung (1) befestigt ist, in Arbeitsstellung der Einrichtung (1) in einer oberhalb der Vorsprünge (V1,V2) angeordneten Ebene positioniert ist.

8. Vorrichtung nach einem der Ansprüche 6 oder 7, **dadurch gekennzeichnet, daß** das Umlenkelement (10,11) und die Vorsprünge (V1,V2) des Trägerteils (2) der Einrichtung (1) symmetrisch zur in Arbeitsstellung vertikal ausgerichteten Mittelachse (M) des Trägerteils (2) angeordnet sind.

9. Vorrichtung nach einem der Ansprüche 6 bis 8, **dadurch gekennzeichnet, daß** das Umlenkelement (10,11) denjenigen Abschnitt (Av) des Anschlagmittels (A) umlenkt, über den die beiden die Hebeeinrichtung (H) und die Last (L1,L2) verbindenden Abschnitte des Anschlagmittels (A) auf der der Last (L1,L2) zugeordneten Seite des Trägerteils (2) miteinander verbunden sind.

10. Vorrichtung nach einem der voranstehenden Ansprüche, **dadurch gekennzeichnet, daß** das Trägerteil (2) der Einrichtung (1) eine Öffnung (8) aufweist, durch die ein Schlaufenabschnitt (As) des Anschlagmittels (A) führbar ist.

11. Vorrichtung nach Anspruch 10, **dadurch gekennzeichnet, daß** durch die Öffnung (8) des Trägerteils (2) ein Schlaufenabschnitt (As) des Anschlagmittels (A) geführt ist, über den die die Last (L1,L2) mit der Hebeeinrichtung (H) verbindenden Abschnitte (A11,A12) des Anschlagmittels (A) mit der Hebeeinrichtung (H) verkoppelt sind.

12. Vorrichtung nach einem der voranstehenden Ansprüche, **dadurch gekennzeichnet, daß** das Umlenkelement (10) des Trägerteils (2) der Einrichtung (1) schwenkbar in einer Öffnung des Trägerteils (2) gelagert ist.

13. Vorrichtung nach einem der Ansprüche 1 bis 11, **dadurch gekennzeichnet, daß** das Umlenkelement (11) als ein fest mit dem Trägerteil (2) verbundener Haken ausgebildet ist.

14. Vorrichtung nach einem der voranstehenden Ansprüche, **dadurch gekennzeichnet, daß** die Einrichtung (1) einstückig durch Schmieden hergestellt ist.

## Claims

1. Device for lifting a load (L1, L2) comprising a lashing means (A) formed as a continuous loop, in particular a textile band folded or woven into a circular loop, or a continuous rope, and a device (1) for adjusting the effective length (Lw) of the lashing means (A) during transport of a load (L1, L2) wherein the device (1) has a carrier part (2) which has a projection (3, 4) at two opposed, spaced apart sides, around which a segment (A11, A12) of the lashing means (A) can be slung.

2. Device according to Claim 1, **characterized in that** the projections (3, 4) of the carrier part (2) of the device (1) are hook-shaped.

3. Device according to Claim 1 or 2, **characterized in that** the projections (3, 4) of the carrier part (2) of the device (1) have bulges or recesses that guide the lashing means (A).

4. Device according to one of the preceding claims, **characterized in that** the projections (3, 4) of the carrier part (2) of the device (1) have markings (6, 7) that denote a critical angle of the segment (A11, A12) of the lashing means (A) running away from the respective projection (3, 4).

5. Device according to one of the preceding claims, **characterized in that** the projections (3, 4) of the carrier part (2) of the device (1) are essentially arranged in a shared horizontal plane in the operating position of the device (1).

6. Device according to one of the preceding claims, **characterized in that** the carrier part (2) of the device (1) carries a deflection element (10, 11) in the area between the projections (3, 4) for deflecting an additional segment (Av) of the lashing means (A).

7. Device according to Claim 5 and 6, **characterized in that** the force-absorbing surface over which the deflection element (10, 11) is attached to the carrier part (2) of the device (1) is located in a plane situated above the projections (V1, V2) in the operating position of the device (1).

8. Device according to one of Claims 6 or 7, **characterized in that** the deflection element (10, 11) and the projections (V1, V2) of the carrier part (2) of the device (1) are arranged symmetrically to the middle axis (M) of the carrier part (2), which is vertically aligned in the operating position.

9. Device according to one of Claims 6 to 8, **characterized in that** the deflection element (10, 11) deflects that segment (Av) of the lashing means (A) via which the two segments of the lashing means (A) connecting the lifting device (H) and the load (L1, L2) are connected together on the side of the carrier part (2) allocated to the load (L1, L2).

10. Device according to one of the preceding claims, **characterized in that** the carrier part (2) of the device (1) has an opening (8) through which a loop segment (As) of the lashing means (A) can be guided.

11. Device according to Claim 10, **characterized in that** through the opening (8) of the carrier part (2) a loop segment (As) of the lashing means (A) is guided via which the sections (A11, A12) of the lashing means (A) connecting the load (L1, L2) with the lifting gear (H) are coupled to the lifting gear (H).

12. Device according to one of the preceding claims, **characterized in that** the deflection element (10) of the carrier part (2) of the device (1) is pivoted in an opening of the carrier part (2).

13. Device according to one of Claims 1 to 11, **characterized in that** the deflection element (11) is designed as a hook rigidly connected with the carrier part (2).

14. Device according to one of the preceding claims, **characterized in that** the device (1) is fabricated as a single piece by forging.

## Revendications

1. Dispositif pour lever une charge (L1, L2) qui comprend un moyen d'accrochage en tant que boucle fermée, en particulier un ruban textile agencé ou tissé en élingue ronde ou un câble sans fin, et un dispositif pour ajuster la longueur active (Lw) du moyen d'accrochage (A), lors du transport d'une charge (L1, L2), l'arrangement (1) présentant une pièce de support (2) qui est pourvue, sur chacun de deux côtés opposés, situés à intervalle l'un de l'autre, d'une saillie (3, 4) autour de laquelle une section (A11, A12) du moyen d'accrochage (A) peut être enroulée.

2. Dispositif selon la revendication 1, **caractérisé en ce que** les saillies (3, 4) de la pièce de support (2) de l'arrangement (1) sont réalisées en forme de crochet.

3. Dispositif selon revendication 1 ou 2, **caractérisé en ce que** les saillies (3, 4) de la pièce de support (2) de l'arrangement (1) présentent des protubérances et des dépressions qui guident le moyen d'accrochage (A).

4. Dispositif selon l'une des revendications précédentes, **caractérisé en ce que** les saillies (3, 4) de la pièce de support (2) de l'arrangement (1) présentent des marques (6, 7) qui indiquent un angle critique de la section (A11, A12) du moyen d'accrochage (A) se dégageant de la saillie respective (3, 4).

5. Dispositif selon l'une des revendications précédentes, **caractérisé en ce que** les saillies (3, 4) de la pièce de support (2) de l'arrangement (1) sont disposées sensiblement dans un plan horizontal commun, dans la position de travail de l'arrangement (1).

6. Dispositif selon l'une des revendications précédentes, **caractérisé en ce que** la pièce de support (2) de l'arrangement (1) porte, dans la zone située entre les saillies (3, 4), un élément de renvoi (10, 11) pour la déviation d'une autre section (Av) du moyen d'accrochage (A).

7. Dispositif selon les revendications 5 et 6, **caractérisé en ce que**, dans la position de travail de l'arrangement (1), la surface de reprise de la force, par l'intermédiaire de laquelle l'élément de renvoi (10, 11) est fixé à la pièce de support (2) de l'arrangement (1), est positionnée dans un plan situé au-dessus des saillies (V1, V2).

8. Dispositif selon revendication 6 ou 7, **caractérisé en ce que** l'élément de renvoi (10, 11) et les saillies (V1, V2) de la pièce de support (2) de l'arrangement (1) sont disposées symétriquement par rapport à l'axe médian (M) de la pièce de support (2) orienté verticalement en position de travail.

9. Dispositif selon l'une des revendications 6 à 8, **caractérisé en ce que** l'élément de renvoi (10, 11) fait dévier la section (Av) du moyen d'accrochage (A) par l'intermédiaire de laquelle les deux sections du moyen d'accrochage (A) qui relient le dispositif de levage (H) et la charge (L1, L2), sont reliées ensemble sur le côté de la pièce de support (2) associé à la charge (L1, L2).

10. Dispositif selon l'une des revendications précédentes, **caractérisé en ce que** la pièce de support (2) de l'arrangement (1) présente une ouverture (8) à travers laquelle une section de boucle (As) du moyen d'accrochage (A) peut être passée.

11. Dispositif selon la revendication 10, **caractérisé en ce que**, par l'ouverture (8) de la pièce de support (2), est guidée une section de boucle (AS) du moyen d'accrochage (A) par l'intermédiaire de laquelle les section (A11, A12) du moyen d'accrochage (A), qui relient la charge (L1, L2) au dispositif de levage (H), sont couplées avec le dispositif de levage (H).

12. Dispositif selon l'une des revendications précédentes, **caractérisé en ce que** l'élément de renvoi (10) de la pièce de support (2) de l'arrangement (1) est monté en pivotement dans une ouverture de la pièce de support (2).

13. Dispositif selon l'une des revendications 1 à 11, **caractérisé en ce que** l'élément de renvoi (11) est conçu en tant que crochet qui est relié fixement à la pièce de support (2).

14. Dispositif selon l'une des revendications précédentes, **caractérisé en ce que** l'arrangement (1) est fabriqué d'une seule pièce par forgeage.
